# FASCICULE DE BREVET EUROPEEN

(11) **EP 2 199 642 B1**
(45) Date de publication et mention de la délivrance du brevet: **13.07.2011**
(21) Numéro de dépôt: 09177187.3
(22) Date de dépôt: 26.11.2009
(51) Int. Cl.: F16F 15/12, F16F 15/26

(54) **Moteur comportant un volant d'inertie et un volant contrarotatif, et ensemble comportant un tel moteur**
Motor mit einem Schwungrad und einem gegenläufigen Laufrad sowie Anordnung, die einen solchen Motor umfasst
Motor comprising a flywheel and a contra-rotating flywheel, and unit comprising such a motor

(30) Priorité: 16.12.2008 FR 0858618
(43) Date de publication de la demande: 23.06.2010
(73) Titulaire: Peugeot Citroën Automobiles SA, 78140 Vélizy-Villacoublay (FR)
(72) Inventeur: Gratadour, Jean, 95390, Saint Prix (FR)

(56) Documents cités:
- EP-A- 1 983 215
- WO-A-2006/082455
- DE-A1- 4 224 987
- DE-A1- 4 427 286
- GB-A- 355 136
- US-A- 4 489 683
- US-A- 5 570 615

## Description

L'invention porte sur le domaine de l'équilibrage des couples et la réduction des acyclismes et vibrations d'un moteur à combustion interne, et particulièrement d'un moteur de type bicylindre en ligne avec pistons en phase (cf. par exemple WO 2006/082455 A, correspondant au préambule de la revendication indépendante 1).

Les moteurs à combustion interne présentent des pistons qui sont mis en mouvement de translation alternative sous l'effet des combustions, ce mouvement étant transformé en une rotation du vilebrequin du moteur.

Du fait de son architecture et de son mode de fonctionnement, un moteur bicylindre en ligne est principalement soumis à trois types d'excitations internes :
- un effort interne de pilon : cet effort alternatif, lié au mouvement alternatif des pistons, à la fréquence de rotation du vilebrequin (et de ses harmoniques), est appliqué au centre du vilebrequin et dirigé dans l'axe des fûts. Ce phénomène est particulièrement important sur un moteur bicylindre. En effet, les cylindres d'un moteur bicylindre à quatre temps présentent généralement des cycles de combustion décalés de 180°. En d'autres termes, lorsqu'un cylindre est en phase d'admission, l'autre est en phase de détente, et lorsqu'un cylindre est en phase de compression, l'autre est en phase d'échappement. Ce qui veut dire que les pistons de chacun des cylindres vont simultanément se diriger vers leur point mort haut, puis simultanément se diriger vers leur point mort bas.
- un couple acyclique sur le vilebrequin : les variations d'énergie cinétique des masses alternatives, et d'énergie élastique des gaz (compression puis détente des gaz dans les cylindres) se font par des échanges avec l'énergie cinétique du vilebrequin. On décrit cet effet par un couple appliqué sur le vilebrequin selon son axe: le couple acyclique, qui est alternatif, à la fréquence de rotation du vilebrequin. Dans une application automobile, ce couple est transmis à la carrosserie à travers la chaine de transmission et la liaison au sol du véhicule.
- un couple de roulis appliqué sur le bloc : ce couple est la réaction sur le bloc du couple appliqué sur le vilebrequin. Ce couple est transmis à la carrosserie à travers la fixation du groupe motopropulseur. Il est particulièrement sévère dans les implantations transversales du groupe motopropulseur.

Diverses dispositions spécifiques sont généralement prises pour lutter contre ces phénomènes.

Pour limiter le couple acyclique du vilebrequin transmis à la chaine cinématique de transmission, la solution traditionnelle consiste à interposer une souplesse torsionnelle (une liaison flexible en torsion) entre le volant moteur et la boite de vitesse, au niveau du moyeu d'embrayage. Rappelons que le volant moteur, qui est une masse généralement positionnée en bout de vilebrequin, permet par son inertie d'achever les cycles de combustion, de résister au couple acyclique, et donc de limiter les fluctuations de vitesse du vilebrequin.

Dans les cas plus exigeants, le volant moteur est divisé en deux étages, et on implante une flexibilité torsionnelle entre les deux étages, formant ainsi un double volant amortisseur ou DVA. La première solution, avec un volant moteur simple, est économique, mais a une efficacité limitée, notamment car elle utilise l'inertie de la boite de vitesse. La seconde solution, avec un double volant amortisseur est très efficace, mais chère.

L'effort de pilon peut être compensé par deux arbres d'équilibrage contrarotatifs présentant des balourds (c'est-à-dire le produit d'une masse par une distance à l'axe de rotation), et tournant à la vitesse correspondant à la fréquence à équilibrer. Pour ne pas générer d'effort parasite, ces deux arbres sont parallèles à l'axe du vilebrequin, et disposé de façon symétrique par rapport au plan passant par l'axe vilebrequin et l'axe des fûts. Le centre de gravité des balourds est disposé dans la direction axiale vilebrequin de façon qu'il compense au mieux l'effort de pilon, sans générer de couple parasite.

Pour le couple de roulis appliqué sur le bloc, on compte en général sur la suspension moteur (et plus précisément dans le cas d'une implantation transversale, la souplesse des anti-couples) pour filtrer cet effort. Cette solution n'est pas toujours suffisante pour atteindre une filtration de bonne qualité, en particulier dans le cas de moteurs à fort couple et/ou à fort taux de compression, où l'excitation est très sévère.

Le traitement de ces différents phénomènes fait donc appel à un ensemble de dispositifs complexes, qui les traitent indépendamment, ce qui entraine complexité d'autant plus grande du moteur lorsqu'il s'agit de traiter les trois problèmes.

Le brevet US5570615 présente un dispositif visant à annuler le roulis du moteur par l'emploi d'un volant moteur comportant un volant d'inertie lié rigidement au vilebrequin et un volant contrarotatif au volant d'inertie. Les acyclismes et le roulis sont ainsi traités, mais l'effort de pilon, particulièrement important dans un bicylindre, n'est pas traité.

On connait des dispositifs spécifiques élaborés pour la réduction de ces phénomènes. La demande de brevet DE4427286 A1, présente un dispositif où le vilebrequin est équilibré par un volant contrarotatif coaxial. Par rapport aux solutions traditionnelles à deux arbres d'équilibrage, le vilebrequin remplace ici l'un des arbres d'équilibrage. Cependant, dans ce cas, le deuxième arbre d'équilibrage doit idéalement être coaxial avec le vilebrequin, avec un balourd au centre, et il prend ici la forme d'un arbre entrainé contrarotativement par un dispositif complexe, qui met en jeu un arbre secondaire qui porte également le volant moteur. Cet ensemble traite principalement les efforts de pilon, mais pose de divers problèmes : la filtration du couple acyclique sur le vilebrequin et de l'effort de roulis sur le moteur n'est pas spécifiquement traitée, et la position du volant moteur, non coaxial du vilebrequin, entraine un couple en torsion supplémentaire subi par le moteur pendant son fonctionnement.

La présente invention vise à résoudre ces problèmes en proposant un moteur équipé d'un dispositif traitant les trois types d'excitations internes d'un moteur bicylindre, par un dispositif simple et qui ne génère pas par ailleurs d'autres efforts parasites sensibles.

Plus précisément, l'invention porte sur un moteur à combustion comportant un vilebrequin sur lequel est monté un volant moteur comportant un volant d'inertie lié rigidement au vilebrequin et un volant contrarotatif par rapport au volant d'inertie, caractérisé en ce que le volant contrarotatif d'une part, et l'ensemble constitué du volant d'inertie et du vilebrequin d'autre part, sont coaxiaux et présentent chacun un balourd par rapport à l'axe de rotation du vilebrequin. Un positionnement et un dimensionnement judicieux permet de contrer les efforts de pilon et une part des acyclismes liés aux combustions.

De préférence, on dispose un moyen de mise en rotation du volant contrarotatif de sorte que le volant contrarotatif tourne à une vitesse égale et opposée à la vitesse de rotation du vilebrequin. Un tel moyen pouvant être une liaison mécanique simple permet d'assurer le mouvement relatif des volants pour contrer les efforts internes du moteur.

Selon l'invention telle que définie par les caractéristiques techniques de la revendication indépendante 1, le volant contrarotatif d'une part, et l'ensemble constitué du volant d'inertie et du vilebrequin d'autre part, présentent chacun un balourd, lesdits balourds générant de préférence, lors du fonctionnement du moteur, un effort alternatif selon une direction donnée, de sorte que cet effort s'oppose au pilon résultant du moteur. Par exemple, dans le cas d'un moteur en ligne, la direction sera sensiblement l'axe des fûts des cylindres. Si les cylindres présentent un certain angle l'un (respectivement les uns) par rapport à l'autre (respectivement les autres), la direction donnée sera celle de la résultante des efforts de pilon subis par le moteur.

Dans une variante d'architecture à plusieurs cylindres en ligne, le centre de gravité des balourds de l'ensemble constitué du vilebrequin et du volant d'inertie est préférentiellement positionné sensiblement à mi-distance des axes des fûts des cylindres extrêmes dans la direction de l'axe vilebrequin. Ce positionnement sensiblement central selon l'axe du vilebrequin permet notamment de ne pas générer d'effort supplémentaire sur le moteur.

Dans une variante d'architecture bicylindre en ligne, les volants d'inertie et contrarotatif sont préférentiellement positionnés entre les deux cylindres du moteur. Ce positionnement permet notamment de ne pas générer d'effort supplémentaire sur le moteur.

De préférence, le volant d'inertie porte une couronne dentée entrainant le volant contrarotatif en rotation. Un entrainement direct du volant contrarotatif par le volant d'inertie lié au vilebrequin permet une liaison mécanique simple entre ces deux éléments, gage d'une bonne fiabilité et d'une parfaite synchronisation des mouvements des deux volants.

De préférence, un engrenage comportant au moins un pignon fixe par rapport au carter est interposé entre la couronne dentée portée par le volant d'inertie et une couronne dentée portée par le volant contrarotatif. C'est une liaison mécanique simple et robuste entre les deux volants.

De préférence, l'engrenage comporte deux pignons coaxiaux de diamètres différents destinés à assurer une vitesse angulaire opposée mais égale à tout instant du volant d'inertie et du volant contrarotatif. En effet, notamment dans le cadre de l'engrènement d'une couronne externe à l'un des volants avec une couronne interne à l'autre volant, deux pignons coaxiaux liés, de diamètre différent, permettent d'assurer une vitesse de rotation égale aux deux volants.

De préférence, les pignons sont dotés d'un dispositif de rattrapage de jeu. Un tel dispositif permet de prévenir l'apparition de bruits parasites.

L'invention porte également sur un ensemble comportant un moteur tel que précédemment défini, et un volant d'embrayage, caractérisé par une liaison flexible en torsion entre le volant d'embrayage et le vilebrequin du moteur. Une telle disposition permet d'obtenir une filtration des acyclismes du même niveau qu'un double volant amortisseur.

L'invention est décrite plus en détail ci-après et en référence aux figures représentant schématiquement le système dans son mode de réalisation préférentiel.

La figure 1 présente schématiquement le vilebrequin d'un moteur, équipé d'un dispositif d'équilibrage et de filtration des excitations internes conforme à l'invention.

La figure 2 présente schématiquement un dispositif d'entrainement externe de volants contrarotatifs.

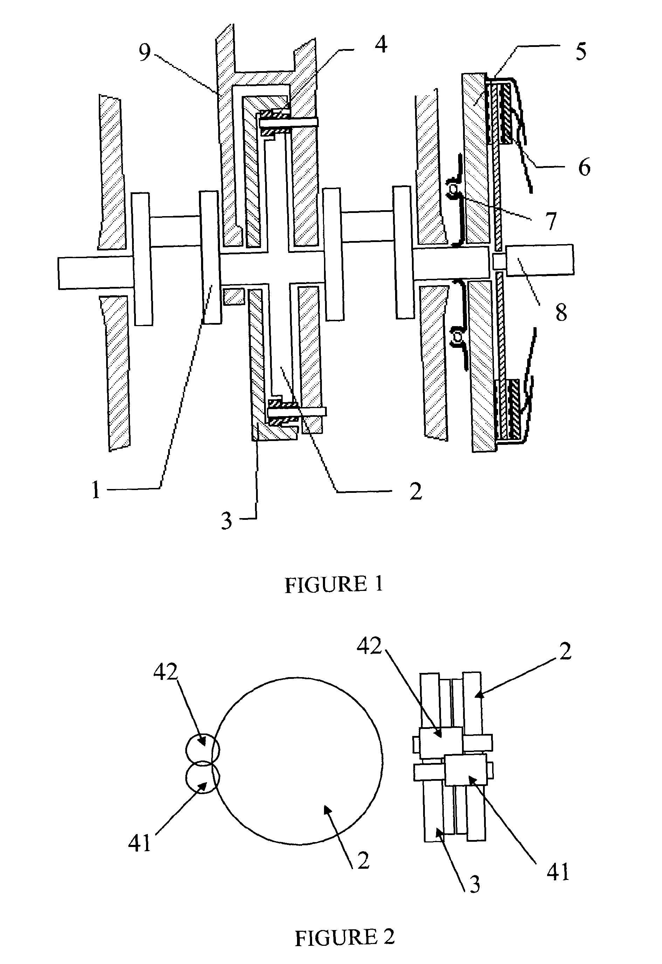

Sur la figure 1, le vilebrequin 1 d'un moteur bicylindre porte un volant moteur comportant un volant d'inertie 2, fixe par rapport au vilebrequin, et un volant contrarotatif 3, tournant en sens opposé mais à la même vitesse de rotation que le vilebrequin 1 ou le volant d'inertie 2. Le volant d'inertie 2 peut être solidairement fixé au vilebrequin 1 ou faire partie intégrante de ce dernier.

La somme des inerties du volant d'inertie 2 et du volant contra-rotatif 3 garantit l'inertie souhaitée pour la stabilité du moteur au ralenti et la limitation de l'acyclisme du vilebrequin en charge (fonction de volant moteur).

Par ailleurs, le vilebrequin 1 associé à son volant d'inertie 2 d'une part et le volant contrarotatif 3 d'autre part possèdent chacun un balourd (c'est-à-dire le produit d'une masse par une distance à l'axe de rotation) égal et opposé, c'est-à-dire que leur centre de gravité est décentré de l'axe de rotation du vilebrequin, de telle sorte que la résultante des efforts de ces balourds lorsque le moteur est en fonctionnement équilibre l'effort de pilon dû aux masses alternatives à l'ordre 1, et cela sans générer de couple parasite.

La disposition centrale du volant d'inertie 2 permet tout à la fois de faciliter l'entrainement du volant contrarotatif 3 et l'implantation du balourd de vilebrequin, et d'autre part d'éviter les résonances faisant travailler le vilebrequin en torsion.

Cela signifie en particulier que les balourds du vilebrequin 1 associé au volant d'inertie 2 et du volant contrarotatif 3 sont à peu près au centre du moteur, c'est-à-dire sensiblement à mi-longueur du vilebrequin (pour ne pas générer de couple parasite significatif).

La répartition d'inertie entre le vilebrequin 1 et son volant d'inertie 2 d'une part, et le volant contrarotatif 3 d'autre part, est à peu prés égale, de façon à minimiser le couple de réaction résultant sur le bloc.

Un engrenage 4 fait la liaison entre une couronne dentée interne au premier volant 2 et une couronne dentée externe au second volant 3. Le montage inverse, ici non représenté, dans lequel le premier volant 2 porterait une couronne externe et le second volant 3 porterait une couronne interne est également envisageable.

L'engrenage 4 est monté en rotation par rapport au carter 9 du moteur, il ne peut que pivoter sur son axe et ne peut pas se translater entre les deux volants. Ainsi, dans le mode de réalisation de l'invention ici représentée, lorsque le vilebrequin tourne, le second volant 3 lié au vilebrequin est en rotation, le second volant 3 entraine alors l'engrenage 4 en rotation, qui, à son tour, transmet au premier volant 2 un mouvement de rotation contrarotative vis-à-vis du second volant 3, ou du vilebrequin.

L'engrenage 4 est en fait constitué de deux pignons coaxiaux de diamètres légèrement différents, engrenant l'un sur le volant d'inertie 2, l'autre sur le volant contrarotatif 3, de façon à rattraper la différence des diamètres d'engrènement et à ce que la vitesse du volant contrarotatif 3 soit exactement opposée à celle du vilebrequin 1.

L'entrainement du volant contrarotatif 3 tel que représenté sur la figure 1 est assuré avec deux pignons solidaires et coaxiaux constituant l'engrenage 4. Dans ce cas ils engrènent sur une couronne extérieure pour l'un des volants, et intérieure pour l'autre. On peut aussi envisager un entrainement entièrement extérieur tel que représenté sur la figure 2, avec deux pignons de renvoi 41 et 42. Cette solution, un peu plus complexe, présente l'avantage de mieux répartir les efforts de réaction sur le bloc moteur.

Selon le mode de réalisation de l'invention réalisé, l'engrenage 4 peut mettre en jeu plusieurs dispositifs d'engrènement pour entrainer le volant contrarotatif 3. On pourra se limiter à 1, mais cela entraine des efforts de réaction importants sur les paliers. On pourra en mettre 2 comme suggéré sur la figure 1, voire 3 (comme c'est par exemple l'usage dans les trains épicycloïdaux).

L'entrainement du volant contrarotatif par des engrenages peut conduire à des claquements de denture, sous l'effet des acyclismes du vilebrequin. Afin de limiter les bruits ainsi générés, on peut utiliser, pour les engrènements critiques, des pignons à rattrapage de jeu. Le dispositif consiste classiquement à diviser le pignon en deux couronnes reliées entre elles par un ressort précontraint, ce qui garantit en toute circonstance le plaquage des dents des deux couronnes sur les faces opposées des dents du pignon sur lequel elles engrènent.

Un volant d'embrayage 5 est disposé en bout de vilebrequin. Ce volant porte un mécanisme d'embrayage et un disque de friction, permettant de mettre en prise le vilebrequin avec l'arbre primaire de boite de vitesses. Dans une solution conventionnelle, le volant d'embrayage est rigidement lié au vilebrequin et assure la fonction volant d'inertie nécessaire au vilebrequin. Ici, il est relié au vilebrequin par une souplesse torsionnelle, c'est-à-dire une liaison 7 flexible en torsion. Le volant d'embrayage, qui dispose d'une inertie minimale afin de garantir l'inertie thermique nécessaire au fonctionnement de la friction d'embrayage 6, joue ici le rôle du volant secondaire d'un double volant amortisseur.

Dans la variante de l'invention ici représentée la liaison 7 flexible en torsion assurant le filtrage de l'acyclisme en rotation, n'est pas placée entre le volant 5 et l'arbre primaire de boite de vitesse 8 comme sur une application conventionnelle, mais entre le vilebrequin 1 et le volant 5. Cette disposition, permet un filtrage des acyclismes entrant dans la boite de vitesse du même niveau qu'un volant double traditionnel.

Ce découplage est rendu possible par le fait que les inerties nécessaires au vilebrequin (fonction de volant moteur) sont assurées par le volant d'inertie 2 et le volant contrarotatif 3. Le découplage ainsi réalisé permet en outre d'éviter les résonances torsionnelles à haute fréquence qui pénalisent la tenue mécanique du vilebrequin.

La souplesse est dimensionnée de façon analogue à celle d'un double volant amortisseur, de telle sorte que l'on n'arrive pas en butée pour les efforts maximum, et que la fréquence du mode de découplage torsionnel soit suffisamment basse pour filtrer les couples acycliques gênants (harmonique 1 dans la plage d'utilisation en charge du moteur).

Ainsi, l'invention permet d'obtenir une bonne filtration des efforts de pilon et du couple de roulis sur le bloc moteur, et tout particulièrement pour un moteur bicylindre, sans générer d'excitation supplémentaire sensible, grâce au dispositif contrarotatif central à balourds opposés. Par ailleurs, grâce à la fonction de volant moteur assurée par le dispositif d'équilibrage, on peut introduire une liaison fiexibie en torsion entre le volant d'embrayage (qui n'a plus la fonction d'inertie mécanique traditionnelle vis-à-vis du moteur) et le vilebrequin, ce qui permet d'atteindre le niveau de prestations que seul un double volant amortisseur peut généralement procurer pour la filtration des acyclismes de rotation du vilebrequin.

## Revendications

1. Moteur à combustion comportant un vilebrequin (1) sur lequel est monté un volant moteur comportant un volant d'inertie (2) lié rigidement au vilebrequin (1) et un volant contrarotatif (3) par rapport au volant d'inertie (2) et coaxial à l'ensemble constitué du volant d'inertie (2) et du vilebrequin (1), **caractérisé en ce que** ledit volant contrarotatif (3) d'une part, et ledit ensemble constitué du volant d'inertie (2) et du vilebrequin (1) d'autre part, présentent chacun un balourd par rapport à l'axe de rotation du vilebrequin (1).

2. Moteur selon la revendication 1, **caractérisé par** un moyen de mise en rotation du volant contrarotatif (3) de sorte que le volant contrarotatif (3) tourne à une vitesse égale et opposée à la vitesse de rotation du vilebrequin (1).

3. Moteur selon la revendication 1 ou la revendication 2, **caractérisé en ce que** les balourds du volant contrarotatif (3) d'une part, et de l'ensemble constitué du volant d'inertie (2) et du vilebrequin (1) d'autre part, sont tels que lors du fonctionnement du moteur ils génèrent un effort alternatif selon une direction donnée, de sorte que cet effort s'oppose au pilon résultant du moteur.

4. Moteur selon l'une des revendications 1 à 3, d'architecture à plusieurs cylindres en ligne, **caractérisé en ce que** le centre de gravité des balourds de l'ensemble constitué du vilebrequin (1) et du volant d'inertie (2) est positionné sensiblement à mi-distance des axes des fûts des cylindres extrêmes dans la direction de l'axe vilebrequin (1).

5. Moteur selon l'une quelconque des revendications précédentes, d'architecture bicylindre en ligne, **caractérisé en ce que** les volants d'inertie (2) et contrarotatif (3) sont positionnés entre les deux cylindres du moteur.

6. Moteur selon l'une quelconque des revendications précédentes, **caractérisé en ce que** le volant d'inertie (2) porte une couronne dentée entrainant le volant contrarotatif (3) en rotation.

7. Moteur selon la revendication 6, **caractérisé en ce qu'**un engrenage (4) comportant au moins un pignon fixe par rapport au carter (9) du moteur est interposé entre la couronne dentée portée par le volant d'inertie (2) et une couronne dentée portée par le volant contrarotatif (3).

8. Moteur selon la revendication 7 **caractérisé en ce que** l'engrenage (4) comporte deux pignons coaxiaux de diamètres différents destinés à assurer une vitesse angulaire opposée mais égale à tout instant du volant d'inertie (2) et du volant contrarotatif (3).

9. Moteur selon la revendication 7 ou la revendication 8, **caractérisé en ce que** les pignons sont dotés d'un dispositif de rattrapage de jeu.

10. Ensemble comportant un moteur selon l'une quelconque des revendications précédentes et un volant d'embrayage (5), **caractérisé par** une liaison (7) flexible en torsion entre le volant d'embrayage (5) et le vilebrequin (1) du moteur.

## Claims

1. Combustion engine comprising a crankshaft (1) on which a flywheel is mounted comprising an inertia wheel (2) rigidly connected to the crankshaft (1), and a contra-rotating flywheel (3) with respect to the inertia wheel (2), and coaxial to the assembly constituted by the inertia wheel (2) and the crankshaft (1), **characterized in that** the said contra-rotating flywheel (3) on the one hand, and the said assembly constituted by the inertia wheel (2) and the crankshaft (1) on the other hand, each present an imbalance with respect to the rotation axis of the crankshaft (1).

2. Engine according to Claim 1, **characterized by** a means for setting in rotation the contra-rotating flywheel (3) such that the contra-rotating flywheel (3) turns at a speed equal to and opposed to the rotation speed of the crankshaft (1).

3. Engine according to Claim 1 or Claim 2, **characterized in that** the imbalances of the contra-rotating flywheel (3) on the one hand, and of the assembly constituted by the inertia wheel (2) and the crankshaft (1) on the other hand, are such that on functioning of the engine they generate an alternating force according to a given direction, such that this force is opposed to the resulting ram of the engine.

4. Engine according to one of Claims 1 to 3, having an architecture of several in-line cylinders, **characterized in that** the centre of gravity of the imbalances of the assembly constituted by the crankshaft (1) and the inertia wheel (2) is positioned substantially half-way along the axes of the shafts of the outer cylinders in the direction of the crankshaft axis (1).

5. Engine according to any one of the preceding claims, having an in-line two-cylinder architecture, **characterized in that** the inertia wheel (2) and contra-rotating flywheel (3) are positioned between the two cylinders of the engine.

6. Engine according to any one of the preceding claims, **characterized in that** the inertia wheel (2) carries a toothed crown driving the contra-rotating flywheel (3) in rotation.

7. Engine according to Claim 6, **characterized in that** a gear (4) comprising at least one pinion which is fixed with respect to the casing (9) of the engine is interposed between the toothed crown carried by the inertia wheel (2) and a toothed crown carried by the contra-rotating flywheel (3).

8. Engine according to Claim 7, **characterized in that** the gear (4) comprises two coaxial pinions of different diameters, intended to ensure an angular speed opposed but equal to any moment of the inertia wheel (2) and of the contra-rotating flywheel (3).

9. Engine according to Claim 7 or Claim 8, **characterized in that** the pinions are provided with a play compensation device.

10. Assembly comprising an engine according to any one of the preceding claims and a clutch wheel (5), **characterized by** a connection (7) which is flexible in torsion between the clutch wheel (5) and the crankshaft (1) of the engine.

## Patentansprüche

1. Verbrennungsmotor, der eine Kurbelwelle (1) aufweist, auf die eine Schwungscheibe montiert ist, die ein Schwungrad (2) aufweist, das starr mit der Kurbelwelle (1) verbunden ist, und ein zum Schwungrad (2) und zu der Einheit bestehend aus dem Schwungrad (2) und der Kurbelwelle (1) koaxiales gegenläufiges Rad (3) aufweist, **dadurch gekennzeichnet, dass** das gegenläufige Rad (3) einerseits und die Einheit bestehend aus dem Schwungrad (2) und der Kurbelwelle (1) andererseits jeweils eine Unwucht in Bezug zu der Rotationsachse der Kurbelwelle (1) aufweisen.

2. Motor nach Anspruch 1, **gekennzeichnet durch** ein Mittel zum Indrehungversetzen des gegenläufigen Rads (3) derart, dass das gegenläufige Rad (3) mit einer gleichen Drehzahl und entgegengesetzt zu der Drehzahl der Kurbelwelle (1) dreht.

3. Motor nach Anspruch 1 oder Anspruch 2, **dadurch gekennzeichnet, dass** die Unwuchten des gegenläufigen Rads (3) einerseits und der Einheit bestehend aus dem Schwungrad (2) und der Kurbelwelle (1) andererseits derart sind, dass sie beim Funktionieren des Motors eine abwechselnde Kraft entlang einer gegebenen Richtung derart erzeugen, dass sich diese Kraft dem Rammen, das sich aus dem Motor ergibt, entgegengesetzt.

4. Motor nach einem der Ansprüche 1 bis 3, mit einem Aufbau mit mehreren Zylinder in Serie, **dadurch gekennzeichnet, dass** der Schwerpunkt der Unwuchten der Einheit bestehend aus der Kurbelwelle (1) und dem Schwungrad (2) im Wesentlichen auf mittlerer Entfernung der Achsen der Schäfte der Endzylinder in die Richtung der Kurbelwellenachse (1) positioniert ist.

5. Motor nach einem der vorhergehenden Ansprüche mit Zweizylinderaufbau in Serie, **dadurch gekennzeichnet, dass** das Schwungrad (2) und das gegenläufige Rad (3) zwischen den zwei Zylindern des Motors positioniert sind.

6. Motor nach einem der vorhergehenden Ansprüche, **dadurch gekennzeichnet, dass** das Schwungrad (2) einen Zahnkranz trägt, der das gegenläufige Rad (3) in Drehung antreibt.

7. Motor nach Anspruch 6, **dadurch gekennzeichnet, dass** ein Räderwerk (4), das mindestens ein Ritzel aufweist, das in Bezug zu dem Gehäuse (9) des Motors stationär ist, zwischen dem Zahnkranz, der von dem Schwungrad (2) getragen wird, und einem Zahnkranz, der von dem gegenläufigen Rad (3) getragen wird, eingefügt ist.

8. Motor nach Anspruch 7, **dadurch gekennzeichnet, dass** das Räderwerk (4) zwei koaxiale Ritzel mit unterschiedlichen Durchmessern aufweist, die dazu bestimmt sind, eine Winkelgeschwindigkeit sicherzustellen, die dem Schwungrad (2) und dem gegenläufigen Rad (3) gleich aber jederzeit entgegengesetzt ist.

9. Motor nach Anspruch 7 oder 8, **dadurch gekennzeichnet, dass** die Ritzel mit einer Vorrichtung zum Nachstellen von Spiel versehen sind.

10. Einheit mit einem Motor nach einem der vorhergehenden Ansprüche und einer Kupplungsschwungscheibe (5), **gekennzeichnet durch** eine in Torsion biegsame Verbindung (7) zwischen dem Kupplungsschwungrad (5) und der Kurbelwelle des Motors (1).
